# EUROPEAN PATENT SPECIFICATION

(11) **EP 3 928 037 B1**
(45) Date of publication and mention of the grant of the patent: **04.12.2024**
(21) Application number: 20707050.9
(22) Date of filing: 21.02.2020
(51) Int. Cl.: F24C 15/10, A47J 37/08, F24C 15/18, A47J 37/06

(54) **HOB WITH INTEGRATED TOASTER**
KOCHFELD MIT INTEGRIERTEM TOASTER
PLAQUE DE CUISSON AVEC GRILLE-PAIN INTÉGRÉ

(30) Priority: 21.02.2019 TR 201902646
(43) Date of publication of application: 29.12.2021
(73) Proprietor: Arçelik Anonim Sirketi, 34445 Istanbul (TR)
(72) Inventor: GOKMEN, Erkan, 34950 ISTANBUL (TR); KARAKAYA, Erkan, 34950 ISTANBUL (TR); TUYSUZ, Seckin, 34950 ISTANBUL (TR)
(86) International application number: PCT/EP2020/054608
(87) International publication number: WO 2020/169794

(56) References cited:
- EP-A1- 2 558 787
- WO-A1-03/060383
- CN-U- 202 858 885
- DE-U1- 202005 016 787
- US-B1- 6 399 925

## Description

The present invention relates to a hob which has electric/induction heating members or gas burners and wherein a toaster is integrated.

Toasters are manufactured in a heavy and high-volume structure in order to ensure the safety of the user. Therefore, the use of a toaster in kitchens with lack of space for electrical household appliances is not practical. When not in use, the toaster occupies unnecessary space on the countertop. Moreover, after each use of the toaster, electrical connections thereof such as cable, plug, etc. must be gathered together, and the problem of smoke and odor disperse in the kitchen when the toaster is operated.

The Patent Application No. JPH0589954 (A) relates to an induction heating hob wherein a toaster can be operated on the glass-ceramic top plate. In the hob disclosed in said document, the toaster is not integrated into the hob and cannot be concealed under the top plate. Patent No. US6399925B1 discloses a cooking appliance with a replaceable surface heating cartridge. Patent Application No. WO03060383A1 discloses a burner plate used in domestic appliances, wherein a toast grill is placed in a burner recess. Patent Application No. EP2558787A1 discloses a cooking appliance comprising an operating module with foldable plates which can operate as a toaster.

The aim of the present invention is the realization of a hob wherein a toaster is integrated into the casing thereof.

The hob realized in order to attain the aim of the present invention comprises a toaster which is disposed into a compartment provided under a heating zone on the top plate so as to be integrated into the casing thereof.

The toaster has a lower unit which is embedded and fixed into the compartment on the hob and an upper unit which is connected to the lower unit from an edge so as to rotate around the horizontal axis and which can be opened/closed on the lower unit.

The upper lid of the toaster supporting the upper unit is lifted up by means of a handle so as to separate the upper unit from the hob top plate plane.

In the passive position of the toaster, the upper unit is closed onto the lower unit, and the lid of the upper unit of the toaster becomes coplanar with the top plate of the hob, thus enabling the toaster to be concealed under the top plate of the hob.

The hob realized in order to attain the aim of the present invention is illustrated in the attached figures, where:

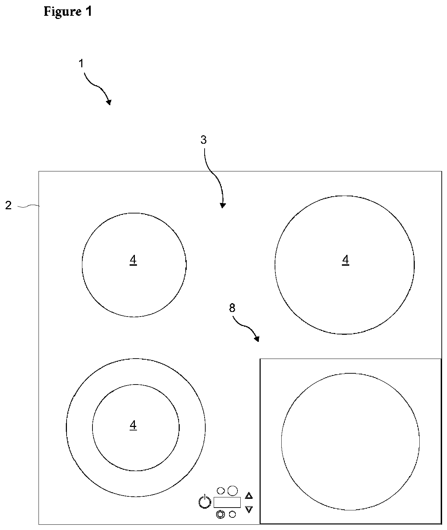

Figure 1 - is the top view of the hob wherein the toaster is integrated.

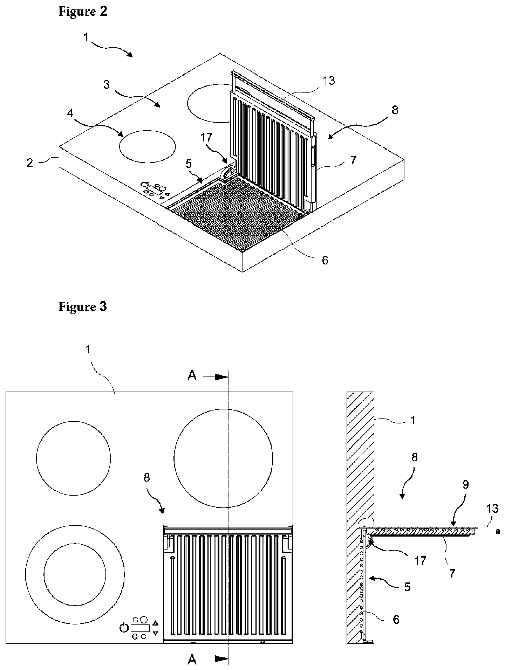

Figure 2 - is the perspective view of the hob when the toaster is in the open position.
Figure 3 - is the top view of the A-A cross-section and of the hob when the toaster is in the open position.
Figure 4 - is the exploded view of the toaster and the hob.
Figure 5 - is the perspective view of the toaster and the hob in an embodiment of the present invention.

The elements illustrated in the figures are numbered as follows:
1. Hob
2. Casing
3. Top plate
4. Heating zone
5. Compartment
6. Lower unit
7. Upper unit
8. Toaster
9. Lid
10. First grilling plate
11. Housing
12. Upper heater
13. Handle
14. Lower heater
15. Second grilling plate
16. Retracting mechanism
17. Hinge

The hob (1) used on a countertop or a stove in a freestanding or built-in manner comprises a casing (2); a top plate (3) which covers the open upper surface of the casing (2); a plurality of heating zones (4) which are disposed on the top plate (3) and whereon cooking vessels are placed; and a plurality of heating members (not shown in figures) which are provided in the heating zones (4).

The hob (1) of the present invention comprises a toaster (8) which is disposed into a compartment (5) formed under a heating zone (4) on the top plate (3) inside the casing (2) and which has a lower unit (6) embedded and fixed into the compartment (5) and an upper unit (7) pivotally connected to the lower unit (6) by means of a hinge (17) from an edge thereof so as to rotate around the horizontal axis and to be opened/closed on the lower unit (6).

The toaster (8) comprises a lid (9) which is provided on the upper unit (7), which is produced by cutting out a heating zone (4) from the top plate (3) of the hob (1) or as a separate piece from the top plate (3), which is separated from the top plate (3) plane by being lifted from one edge thereof and which becomes coplanar with the top plate (3) by being closed onto the compartment (5) when the toaster (8) is not in use.

When the toaster (8) integrated into the hob (1) is desired to be used, the upper unit (7) is lifted from one edge thereof and separated from the top plate (3) plane so as to be moved away from the lower unit (6) fixed into the compartment (5), and then as in the state of the art embodiments the upper unit (7) is pressed onto the lower unit (6) after the foodstuffs to be heated are placed therebetween. When the toaster (8) is not in use, the upper unit (7) is closed onto the lower unit (6) and placed into the compartment (5), and the lid (9) becomes coplanar with the top plate (3).

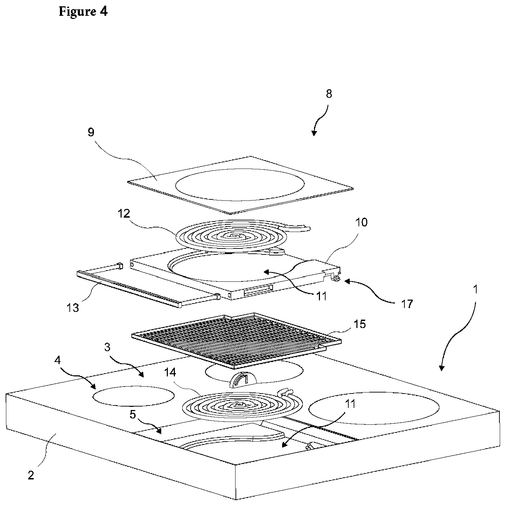

The toaster (8) comprises a first grilling plate (10) which is detachably attached to the upper unit (7); an upper heater (12) which is fixed into a housing (11) provided under the lid (9); a handle (13) which enables the user to lift and lower the upper unit (7) on the lower unit (6); a lower heater (14) which is fixed into a housing (11) provided on the base of the compartment (5); and a second grilling plate (15) which is detachably attached to the lower unit (6) (Figure 4).

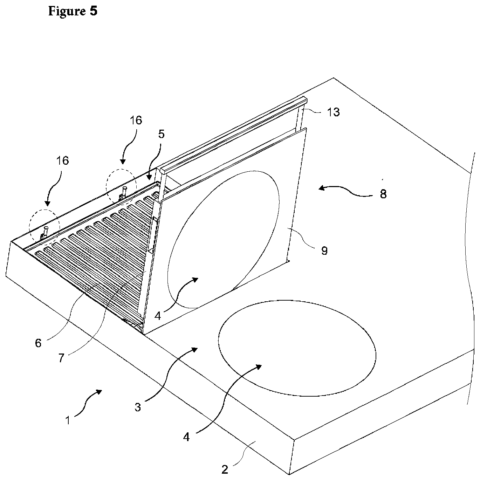

The hob (1) comprises at least one retracting mechanism (16) which is provided in the compartment (5), which extends vertically from the base of the compartment (5) towards the upper unit (7), which bears against the lower surface of the front side of the lid (9) in the closed position and which enables the upper unit (7) to be pushed upwards so as to stand ajar on the lower unit (6) when the toaster (8) is desired to be used and the lid (9) is pushed down once (Figure 5).

When the toaster (8) is turned off, the lid (9) is pushed again and this time, the retracting mechanism (16) against which the lid (9) bears shifts to the push-in position, enabling the lid (9) to remain coplanar with the top plate (3). Mechanisms like the retracting mechanism (16) are also called "push-in pop-out".

The retracting mechanism (16) functions as a switch, enabling the toaster (8) to be energized when the lid (9) is lifted and the energy of the toaster (8) to be cut off when the lid (9) is closed.

When the toaster (8) which is turned off is desired to be used, the front side of the lid (9) is pushed down once, the retracting mechanism (16) pushes the lid (9) upwards, moving the front side of the upper unit (7) away from the lower unit (6), hence from the top plate (3), in other words slightly opening the upper unit (7). The toaster (8) is energized and made ready for use, and the user lifts the lid (9) and places the foodstuff to be heated between the upper unit (7) and the lower unit (6). To turn off the toaster (8), the front side of the lid (9) is pushed down, and as the retracting mechanism (16) is in the push-in position, the lid (9) of the toaster (8) becomes coplanar with the top plate (3) of the hob (1).

In another embodiment of the present invention, the lid (9) is used as an additional heating zone (4) on the top plate (3) when the toaster (8) is deactivated (Figure 5). In this embodiment, the upper heater (12) is used as an additional heating member on the top plate (3).

In an embodiment of the present invention, the hob (1) comprises the top plate (3) produced from glass-ceramic material, and therefore, the toaster (8) comprises a lid (9) produced from glass-ceramic material.

In another embodiment of the present invention, the hob (1) comprises at least one electric or induction heating member used at the heating zones (4) outside the toaster (8).

In another embodiment of the present invention, the hob (1) comprises heating members having gas burners and used at the heating zones (4) outside the toaster (8).

The toaster (8) integrated into the hob (1) of the present invention does not occupy any space in the kitchen, and the problems of making the electric (cable-plug) connection before every use and of gathering together the cable-plug group after every use are eliminated. Since the hob (1) is generally operated under an exhaust hood, any smoke or odor dissipating in the kitchen is prevented. By activating only the upper unit (7) of the toaster (8), the upper heater (12) can be operated as the other heating members of the hob (1). When not in use, the toaster (8) can be concealed in the compartment (5) under the top plate (3) of the hob (1), thus providing ease of use.

## Claims

1. - A hob (1) used on a countertop or a stove in a freestanding or built-in manner **comprising** a casing (2); a top plate (3); a plurality of heating zones (4) which are disposed on the top plate (3); a plurality of heating members which are provided in the heating zones (4); and a toaster (8) which is disposed into a compartment (5) formed under a heating zone (4) on the top plate (3) inside the casing (2) and which has a lower unit (6) embedded and fixed into the compartment (5) and an upper unit (7) pivotally connected to the lower unit (6) by means of a hinge (17) from an edge thereof so as to rotate around the horizontal axis and to be opened/closed on the lower unit (6), **characterized by** the toaster (8) comprising a lid (9) which is provided on the upper unit (7), which is produced by cutting out a heating zone (4) from the top plate (3) or as a separate piece from the top plate (3), which is separated from the top plate (3) plane by being lifted from one edge thereof and which becomes coplanar with the top plate (3) by being closed onto the compartment (5), the hob being further **characterized by** at least one retracting mechanism (16) which extends vertically from the base of the compartment (5) towards the upper unit (7), which bears against the lower surface of the front side of the lid (9), which enables the upper unit (7) to be pushed upwards so as to stand ajar on the lower unit (6) when the lid (9) is pushed down once and which shifts to the push-in position when the lid (9) is pushed for the second time so as to enable the lid (9) to be kept coplanar with the top plate (3), wherein the retracting mechanism (16) functions as a switch and enables the toaster (8) to be energized when the lid (9) is lifted and the energy of the toaster (8) to be cut off when the lid (9) is closed.

2. - A hob (1) as in Claim 1, **characterized by** the toaster (8) comprising a first grilling plate (10) which is detachably attached to the upper unit (7); an upper heater (12) which is fixed into a housing (11) provided under the lid (9); and a handle (13) which enables the upper unit (7) to be lifted/lowered on the lower unit (6).

3. - A hob (1) as in Claim 1, **characterized by** the toaster (8) comprising a lower heater (14) which is fixed into a housing (11) provided on the base of the compartment (5); and a second grilling plate (15) which is detachably attached to the lower unit (6).

4. - A hob (1) as in Claim 2, **characterized by** the lid (9) which is used as an additional heating zone (4) on the top plate (3) and the upper heater (12) which is used as an additional heating member.

5. - A hob (1) in any one of the above claims, **characterized by** the lid (9) being produced from glass-ceramic material.

6. - A hob (1) as in Claim 1, **characterized by** at least one electric or induction heating member used at the heating zones (4) outside the toaster (8).

7. - A hob (1) as in Claim 1, **characterized by** heating members comprising gas burners and used at the heating zones (4) outside the toaster (8).

## Patentansprüche

1. - Ein Kochfeld (1), das auf einer Arbeitsplatte oder einem Herd freistehend oder eingebaut verwendet wird, **umfasst** ein Gehäuse (2); eine Deckplatte (3); eine Vielzahl von Heizzonen (4), die auf der Deckplatte (3) angeordnet sind; eine Vielzahl von Heizelementen, die in den Heizzonen (4) vorgesehen sind; und einen Toaster (8), der in einem Fach (5) angeordnet ist, das unter einer Heizzone (4) auf der oberen Platte (3) innerhalb des Gehäuses (2) ausgebildet ist, und der eine untere Einheit (6), die in das Fach (5) eingebettet und darin befestigt ist, und eine obere Einheit (7) aufweist, die mit der unteren Einheit (6) mittels eines Scharniers (17) von einer Kante derselben aus schwenkbar verbunden ist, so dass sie sich um die horizontale Achse dreht und an der unteren Einheit (6) geöffnet/geschlossen werden kann, **gekennzeichnet ist es durch** den Toaster (8) mit einem Deckel (9), der auf der oberen Einheit (7) vorgesehen ist, der durch Ausschneiden einer Heizzone (4) aus der oberen Platte (3) oder als separates Stück aus der oberen Platte (3) hergestellt ist, die von der Ebene der Deckplatte (3) getrennt wird, indem sie von einer Kante derselben angehoben wird, und die mit der Deckplatte (3) koplanar wird, indem sie auf das Fach (5) geschlossen wird, wobei der Hopfen außerdem durch mindestens einen Rückzugsmechanismus (16) gekennzeichnet ist, der sich vertikal von der Basis des Fachs (5) zur oberen Einheit (7) erstreckt, der sich an der unteren Fläche der Vorderseite des Deckels (9) abstützt, der es ermöglicht, die obere Einheit (7) nach oben zu schieben, so dass sie auf der unteren Einheit (6) angelehnt ist, wenn der Deckel (9) einmal nach unten geschoben wird, und der sich in die Einschiebeposition verschiebt, wenn der Deckel (9) zum zweiten Mal geschoben wird, so dass der Deckel (9) koplanar mit der oberen Platte (3) gehalten werden kann, wobei der Einschiebemechanismus (16) als ein Schalter fungiert und es ermöglicht, dass der Toaster (8) mit Energie versorgt wird, wenn der Deckel (9) angehoben wird, und dass die Energie des Toasters (8) unterbrochen wird, wenn der Deckel (9) geschlossen wird.

2. - Ein Kochfeld (1), wie in Anspruch 1 aufgeführt, **ist dadurch gekennzeichnet, dass** der Toaster (8) eine erste Grillplatte (10) umfasst, die abnehmbar an der oberen Einheit (7) befestigt ist; eine obere Heizung (12), die in einem unter dem Deckel (9) vorgesehenen Gehäuse (11) befestigt ist; und einen Griff (13), der es ermöglicht, die obere Einheit (7) auf der unteren Einheit (6) anzuheben/abzusenken.

3. - Ein Kochfeld (1), wie in Anspruch 1 aufgeführt, **ist dadurch gekennzeichnet, dass** der Toaster (8) einen unteren Heizer (14), der in einem am Boden des Fachs (5) vorgesehenen Gehäuse (11) befestigt ist, und eine zweite Grillplatte (15) umfasst, die abnehmbar an der unteren Einheit (6) angebracht ist.

4. - Ein Kochfeld (1), wie in Anspruch 2 aufgeführt, **ist dadurch gekennzeichnet, dass** der Deckel (9), der als zusätzliche Heizzone (4) auf der oberen Platte (3) verwendet wird, und die obere Heizung (12), die als zusätzliches Heizelement verwendet wird.

5. - Ein Kochfeld (1), wie in einem der vorherigen Ansprüchen aufgeführt, **ist dadurch gekennzeichnet, dass** der Deckel (9) aus Glaskeramik hergestellt ist.

6. - Ein Kochfeld (1), wie in Anspruch 1 aufgeführt, **ist dadurch gekennzeichnet, dass** mindestens ein elektrisches oder induktives Heizelement an den Heizzonen (4) außerhalb des Toasters (8) verwendet wird.

7. - Ein Kochfeld (1), wie in Anspruch 1 aufgeführt, **ist dadurch gekennzeichnet, dass** die Heizelemente aus Gasbrennern bestehen und in den Heizzonen (4) außerhalb des Toasters (8) verwendet werden.

## Revendications

1. - Une plaque de cuisson (1) utilisée sur un plan de travail ou une cuisinière de manière autonome ou encastrée, **comprenant** un boîtier (2) ; une plaque supérieure (3) ; une pluralité de zones de chauffage (4) disposées sur la plaque supérieure (3) ; une pluralité d'éléments chauffants disposés dans les zones de chauffage (4) ; et un grille-pain (8) qui est disposé dans un compartiment (5) formé sous une zone de chauffage (4) sur la plaque supérieure (3) à l'intérieur du boîtier (2) et qui possède une unité inférieure (6) encastrée et fixée dans le compartiment (5) et une unité supérieure (7) reliée de manière pivotante à l'unité inférieure (6) au moyen d'une charnière (17) à partir d'un bord de ses bords, de manière à pouvoir tourner autour de l'axe horizontal et à être ouverte/fermée sur l'unité inférieure (6), **caractérisée par** le grille-pain (8) qui comprend un couvercle (9) qui est disposé sur l'unité supérieure (7), qui est fabriqué en découpant une zone de chauffage (4) de la plaque supérieure (3) ou en tant que pièce séparée de la plaque supérieure (3), qui est séparé du plan de la plaque supérieure (3) en étant soulevé d'un bord de celle-ci et qui devient coplanaire avec la plaque supérieure (3) lorsqu'il est fermé sur le compartiment (5), la plaque de cuisson étant en outre **caractérisée par** au moins un mécanisme de rétractation (16) qui s'étend verticalement depuis la base du compartiment (5) vers l'unité supérieure (7), qui s'appuie sur la surface inférieure de la face avant du couvercle (9), qui permet à l'unité supérieure (7) d'être poussée vers le haut de manière à rester entrouverte sur l'unité inférieure (6) lorsque le couvercle (9) est poussé une première fois vers le bas, et de poussée lorsque le couvercle (9) est poussé une seconde fois pour permettre au couvercle (9) de rester coplanaire avec la plaque supérieure (3), dans lequel le mécanisme de rétractation (16) fonctionne comme un commutateur et permet d'alimenter le grille-pain (8) en énergie lorsque le couvercle (9) est soulevé et de couper l'alimentation lorsque le couvercle (9) est fermé.

2. - Une plaque de cuisson (1) selon la revendication 1, **caractérisée par** le grille-pain (8) qui comprend une première plaque de grill (10) fixée de manière amovible à l'unité supérieure (7) ; un élément chauffant supérieur (12) qui est fixé dans un logement (11) disposé sous le couvercle (9) ; et une poignée (13) qui permet de soulever/d'abaisser l'unité supérieure (7) sur l'unité inférieure (6).

3. - Une plaque de cuisson (1) selon la revendication 1, **caractérisée par** le grille-pain (8) qui comprend un élément chauffant inférieur (14) qui est fixé dans un logement (11) disposé à la base du compartiment (5) ; et une seconde plaque de grill (15) qui est fixée de manière amovible à l'unité inférieure (6).

4. - Une plaque de cuisson (1) selon la revendication 2, **caractérisée par** le couvercle (9) qui est utilisé comme zone de chauffage supplémentaire (4) sur la plaque supérieure (3) et l'élément chauffant supérieur (12) qui est utilisé comme un élément chauffant supplémentaire.

5. - Une plaque de cuisson (1) selon l'une quelconque des revendications précédentes, **caractérisée par** le couvercle (9) qui est fabriqué en matériau vitrocéramique.

6. - Une plaque de cuisson (1) selon la revendication 1, **caractérisée par** au moins un élément chauffant électrique ou à induction qui est utilisé dans les zones de chauffage (4) en dehors du grille-pain (8).

7. - Une plaque de cuisson (1) selon la revendication 1, **caractérisée par** des éléments chauffants qui comprennent des brûleurs à gaz et qui sont utilisés dans les zones de chauffage (4) en dehors du grille-pain (8).
